Europäisches Patentamt

European Patent Office

Office européen des brevets

(19)

(11) Numéro de publication : **0 344 037 B1**

(12) ## FASCICULE DE BREVET EUROPEEN

(45) Date de publication du fascicule du brevet :
**16.12.92 Bulletin 92/51**

(51) Int. Cl.$^5$ : **B23F 23/12**, B23Q 3/18,
G01B 7/31, B23Q 16/02,
B23Q 17/22

(21) Numéro de dépôt : **89401309.3**

(22) Date de dépôt : **11.05.89**

(54) **Machine de réglage de pignons arbrés sur outillage.**

(30) Priorité : **17.05.88 FR 8806591**

(43) Date de publication de la demande :
**29.11.89 Bulletin 89/48**

(45) Mention de la délivrance du brevet :
**16.12.92 Bulletin 92/51**

(84) Etats contractants désignés :
**BE DE FR GB IT SE**

(56) Documents cités :
**CH-A- 381 050
GB-A- 1 438 640
GB-A- 2 056 344
TECHNICA, volume 23, page 2034, Zürich, CH;
"Prüfgerät für Zahnräder" *
PATENT ABSTRACTS OF JAPAN vol. 9, no.
164 (M-395)(1887), 10 juillet 1985 ; & JP-A-60
39056 (FUJITSU) 28-02-1985**

(73) Titulaire : **HISPANO-SUIZA Société anonyme
dite:
333, Bureaux de la Colline
F-92213 Saint Cloud (FR)**

(72) Inventeur : **Cattelain, Camille, Marcel
Impasse des Clos Milons
F-95130 Franconville (FR)**
Inventeur : **Girard, Francis
36, rue Edouard Branly
F-78220 Viroflay (FR)**
Inventeur : **Reide, Gaston, Henri
3, avenue de Verdun
F-92250 La Garenne-Colombes (FR)**

(74) Mandataire : **Moinat, François
S.N.E.C.M.A. Service des Brevets Boîte
Postale 81
F-91003 Evry Cédex (FR)**

Jouve, 18, rue Saint-Denis, 75001 PARIS

EP 0 344 037 B1

# Description

L'invention concerne selon le préambule de la revendication 1 une machine de réglage de pignons arbrés sur outillage, en vue d'une opération de reprise des chanfreins intérieurs d'extrémité, appelés centres, par rectification; voir par exemple GB-A 2 056 344.

Dans le cycle de fabrication de pignons arbrés, notamment de type cylindriques et notamment destinés à des applications sur matériels aéronautiques imposant des critères sévères de précision et de qualité, à chaque extrémité de ces pièces, on ménage habituellement un chanfrein intérieur permettant la prise de pièces, dénommé centre. En cours de fabrication, avant les stades ultimes de finition, intervient habituellement une opération de traitement thermique qui entraîne des déformations et les défauts géométriques résultant au niveau d'une denture sont notamment qualifiés de saut et de voile, comme il sera précisé plus loin et comme cela est déjà bien connu d'un homme de métier. A ce stade, il devient par conséquent nécessaire d'effectuer sur les pignons arbrés une opération de reprise des centres avant de poursuivre les opérations de finition des pièces et notamment les rectifications des parties à cotes précises, portées de roulement, denture et cannelures. Cette opération de rectification des centres a donc pour but de définir pour le pignon arbré un axe de référence par rapport auquel doit être déterminé la géométrie desdites parties à cotes précises.

La demande de brevet intitulée "Procédé d'usinage de pignons arbrés par rectification des centres" déposée conjointement à la présente et au nom du même déposant et ayant la même date de priorité décrit les étapes conduisant à une matérialisation de l'axe de référence du pignon ainsi que l'outillage spécialement conçu pour la mise en oeuvre dudit procédé.

L'invention concerne une machine de réglage sur laquelle est réalisée une opération de centrage de deux chemins de roulement entrant dans l'ensemble constitué par le pignon arbré équipé à chaque extrémité de l'un desdits chemins de roulement.

Pour réaliser diverses opérations d'usinage, de contrôle ou de réglage, notamment portant sur des pièces arbrées, il est bien connu d'utiliser une machine permettant une prise de pièce entre pointes et comportant une broche d'entraînement en rotation de la pièce. Il est également connu, notamment pour des opérations de vérification ou de contrôle de pignons d'associer au pignon à tester un outillage comportant une denture-type susceptible d'engrener avec la denture du pignon à tester.

La machine permettant de réaliser le réglage de pignons arbrés sur outillage est caractérisée en ce qu'elle comporte en outre, d'une part, destinés à coopérer respectivement avec chacun des deux chemins de roulement montés un à chaque extrémité du pignon arbré, deux bras portant chacun des moyens de coopération consistant en un poussoir à tige, en deux patins d'appui escamotables et en au moins un capteur à palpeur de position et, d'autre part, des moyens de commande par ordinateur dont le déroulement des étapes de réglage est assuré par des moyens d'interaction opérateur-machine comportant un écran de visualisation affichant les étapes successives du processus de réglage sous forme de tableaux successifs, indiquant les résultats obtenus et constituant en outre un moyen d'introduction de données et de commande du déroulement du programme à partir duquel les moyens de commande de la machine sont actionnés par ledit ordinateur.

D'autres caractéristiques et avantages de l'invention seront mieux compris à la lecture de la description qui va suivre d'un mode de réalisation de l'invention et en référence aux dessins annexés sur lesquels :

- la figure 1 représente une vue en perspective d'une machine de réglage de pignons arbrés sur un outillage, selon un mode de réalisation de l'invention ;
- la figure 2 représente sous forme symbolisée d'une succession de tableaux un logigramme de fonctionnement de la machine représentée à la figure 1.

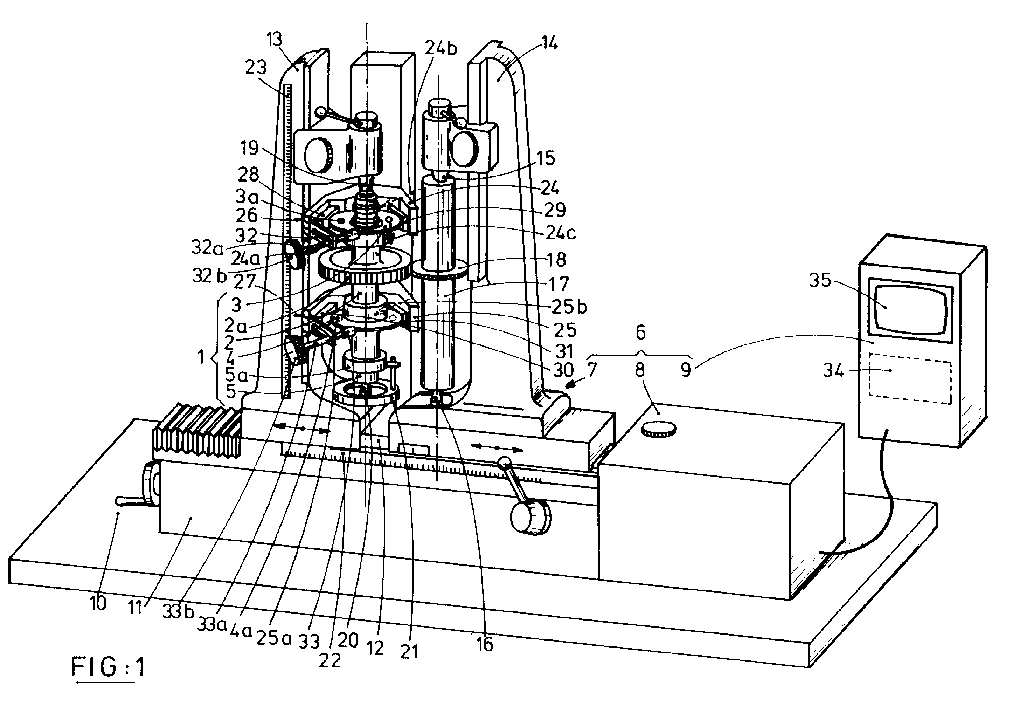

On a représenté sur la figure 1 un ensemble 1 constitué d'un pignon arbré 2 sur lequel doit être effectué une opération de rectification des chanfreins intérieurs d'extrémité ou centres, équipé, conformément à la description détaillée qui en est donnée dans la demande de brevet intitulée "Procédé d'usinage de pignons arbrés par rectification des centres" déposée conjointement à la présente et au nom du même déposant, d'un outillage de matérialisation de l'axe de référence du pignon comportant notamment deux chemins de roulement, respectivement 3 et 4, montés chacun à une extrémité dudit pignon arbré 2. L'ensemble 1 comporte, en outre, un mandrin 5 portant ledit pignon arbré 2 et muni d'une pièce d'entraînement 5a.

Ledit ensemble 1 est monté sur une machine 6 de réglage dudit pignon arbré 2 par rapport aux chemins de roulement 3 et 4, conforme à l'invention. Ladite machine 6 se compose d'un ensemble électro-mécanique 7, d'un boîtier de liaison 8 et d'une armoire d'alimentation et de commande 9. Ledit ensemble 7 électromécanique de la machine 6 comporte un bati 10 de machine comportant un socle 11 muni, de manière connue en soi, de glissières de guidage 12 supportant une potence-support 13 sur laquelle est montée ledit ensemble 1 et une potence-support 14 sur laquelle est montée entre deux pointes 15 et 16 un outillage 17 formant un ensemble arbré qui porte une denture-type 18, susceptible d'engrener avec la denture 2a du pignon arbré 2. Ledit ensemble 1 est monté sur la machine 6 entre deux pointes 19 et 20. La pointe 20 est associée à un plateau d'entraînement 21 qui coopère avec la pièce d'entraînement 5a de l'ensemble 1 et est solidaire d'une broche rotative de la machine 6 liée, selon des dispositions connues en soi, à un moteur d'entraînement relié par l'intermédiaire du boîtier de liaison 8 à l'armoire d'alimentation et de commande 9. La machine 6 est également munie de tous les dispositifs connus en soi de mise en position et de vérification de la position de l'ensemble 1 et de l'outillage 17 sur la machine et l'un par rapport à l'autre, tels que règles de repérage et d'indexage 22 et 23.

Par ailleurs et de manière remarquable conforme à l'invention, la machine 6 est équipée de deux bras, un bras haut 24 et un bras bas 25, solidarisés avec la potence-support 13 comportant chacun un index, respectivement 26 et 27 de vérification de la position. Chaque bras 24 ou 25 porte des moyens de coopération avec l'un des chemins de roulement 3 et 4 de l'ensemble 1. Ces moyens comportent notamment et pour chaque bras, deux patins d'appui, respectivement 28, 29 et 30, 31 disposés symétriquement par rapport à l'axe de rotation de l'ensemble 1 entre pointes. Chaque patin est associé à un levier d'escamotage. Ils comportent également un poussoir, respectivement 32 et 33 porté par une tige, 32a et 33a, terminée par un bouton moleté 32b et 33b de manoeuvre. Ladite tige 32a ou 33a est portée par un support, respectivement 24a et 25a, solidaire du bras correspondant 24, 25 et susceptible d'un mouvement de pivotement pour amener le poussoir, 32 ou 33 à coopérer avec le chemin de roulement 3 ou 4 pour le faire glisser dans son plan sur son support de l'ensemble 1 sur lequel il peut être bloqué par les vis 3a ou 4a ou pour dégager le poussoir. Chaque bras 24 ou 25 porte également un capteur à palpeur 24b ou 25b relié par le boîtier de liaison 8 à l'armoire de commande 9 et destiné à relever la position du chemin de roulement 3 ou 4. Un capteur à palpeur complémentaire 24c est destiné à la vérification du voile du pignon 2.

Ladite machine 6 est encore remarquable par ses moyens de commande associés conforme à l'invention et aménagés dans l'armoire 9. Ces moyens comportent notamment un ordinateur 34 associé à un écran tactile 35. Cet écran tactile 35 comporte notamment une trame d'éléments qui sont sensibles aux variations thermiques par effet infra-rouge et qui sont, en conséquence, susceptibles d'initialiser un signal électrique sous l'action de la pression d'un doigt de l'opérateur sur ledit écran 35. En même temps, cet écran 35 comporte des éléments d'affichage de manière à constituer un écran de visualisation. L'écran 35 est ainsi susceptible d'afficher par tableaux successifs le déroulement du programme qui est associé à l'ordinateur 34 en même temps qu'il est utilisé par l'opérateur pour l'entrée des données et des instructions de commande nécessaires d'une part au déroulement du programme et d'autre part à la commande des éléments actifs de la machine 6. Sur l'écran 35 s'affichent également les résultats des mesures relevées par les palpeurs associés à chaque bras 24 ou 25.

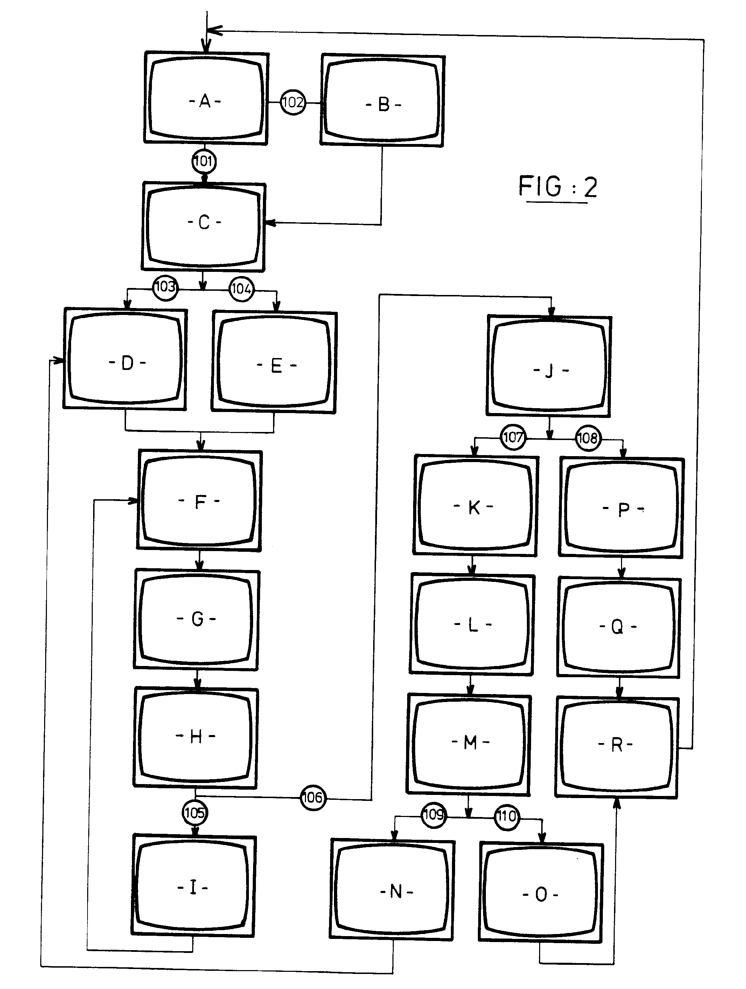

La figure 2 représente ainsi sous forme de logigramme de fonctionnement le déroulé d'une opération de réglage d'un pignon arbré 2 par rapport aux chemins de roulement 3 et 4 matérialisant un axe de référence en vue de la rectification des centres dudit pignon 2.

Les tableaux symbolisent la succession des informations apparaissant sur l'écran 35 et les flèches de liaison indiquent cette succession.

Au tableau A, l'opérateur introduit les données d'identification du pignon 2. Le chemin 101 vers le tableau C correspond à une pièce connue par comparaison effectuée par l'ordinateur 34 au fichier préexistant tandis que le chemin 102 vers le tableau B correspond à une pièce inconnue ne possédant pas d'identification au niveau du fichier et de même, selon le cas, le chemin 103 vers le tableau D ou le chemin 104 vers le tableau E correspondant à l'existence ou non dans le fichier. Les tableaux suivants F, G, H indiquent à l'opérateur les réglages à effectuer sur la machine 6 pour la mise en position des patins d'appui 28, 29, 30, 31 sur les chemins de roulement 3 et 4. La poursuite du processus et le déroulement du programme sont assurés par la validation à l'écran tactile 35 que l'opérateur effectue après chaque vérification, réglage ou entrée de données. Après réglage, lorsque le défaut de saut relevé est supérieur ou égal à une valeur de seuil S1, prédéterminée, le chemin 105 conduit au tableau I qui renvoie à une nouvelle succession F, G, H de reprise des réglages. Au contraire, lorsque le saut obtenu est inférieur à ladite valeur de seuil S1, le chemin 106 amène la poursuite du processus.

Si les valeurs d'excentrations par rapport à l'axe de référence sont dans une tolérance imposée au tableau J, le chemin 107 conduit aux tableaux suivants K, L, M qui correspondent au déplacement des chemins de roulement 3 et 4 par action sur les poussoirs 32 et 33 tandis que les valeurs obtenues sont contrôlées par affichage sur l'écran 35 et au dégagement des poussoirs 32 et 33 et à l'escamotage des patins d'appui 28, 29, 30, 31 après réglage. Le chemin 109 correspond à des défauts hors tolérance relevés sur le pignon arbré 2 par rapport à l'axe de référence obtenu, indiqués sur le tableau N, et conduit par conséquent à une reprise des réglages par retour au tableau D. Le chemin 110, au contraire, correspond à une acceptation des réglages donnant des résultats satisfaisants aux tolérances imposées et indique au tableau O la fin de l'opération de réglage du pignon arbré 2 sur la machine 6. En parallèle au chemin 107, le chemin 108 mène aux tableaux P et Q qui indiquent également une fin d'opération correspondant à une impossibilité d'obtenir le réglage dans les tolérances imposées. Dans l'un et l'autre cas, le tableau R assure le retour en début de programme pour le réglage de la pièce suivante.

## Revendications

1. Machine de réglage de pignons arbrés sur un outillage, en vue d'une opération de rectification des chanfreins intérieurs d'extrémité ou centres, comportant associés à un bati (10) de machine, des moyens (13) de prise de pièce entre pointes (19, 20) des moyens de support (14) entre pointes (15, 16) d'un outillage (17) muni d'une denture-type (18), une broche d'entraînement (21) en rotation de ladite pièce associée à un moyen moteur, des moyens de mise en position desdits éléments, pièce et outillage et de vérification (22, 23) et une armoire (9) associée comportant les moyens d'alimentation de moteur et les moyens de commande de la machine caractérisée en ce qu'elle comporte en outre, d'une part, destinés à coopérer respectivement avec chacun des deux chemins de roulement (3, 4) montés un à chaque extrémité du pignon arbré (2), deux bras (24, 25) portant chacun des moyens de coopération consistant en un poussoir (32, 33) à tige (32a, 33a), en deux patins d'appui (28, 29, 30, 31) escamotables et en au moins un capteur à palpeur de position (24b, 25b, 24c) et, d'autre part, des moyens de commande par ordinateur (34) dont le déroulement des étapes de réglage est assuré par des moyens d'interaction opérateur-machine comportant un écran (35) de visualisation affichant les étapes successives du processus de réglage sous forme de tableaux successifs. (A à R), indiquant les résultats obtenus et constituant en outre un moyen d'introduction de données et de commande du déroulement du programme à partir duquel les moyens de commande de la machine sont actionnés par ledit ordinateur (34).

2. Machine de réglage de pignons arbrés sur un outillage selon la revendication 1 dans laquelle ledit écran est constitué par un écran tactile (35) à éléments sensibles aux variations thermiques par effet infra-rouge qui initialise un signal par pression du doigt d'un opérateur.

3. Machine de réglage de pignons arbrés sur un outillage selon l'une des revendications 1 ou 2 dans laquelle le déroulement des étapes de réglage comporte le défilement à l'écran (35) des tableaux suivants, associés aux interventions correspondantes de l'opérateur :

   (a) - au moins un tableau (A, B, C, D, E) pour l'introduction d'au moins un code alphanumérique d'identification du pignon (2) ;

   (b) - trois tableaux suivants (F, G, H) correspondant aux réglages effectués par l'opérateur sur la machine respectivement sur le premier chemin de roulement (3), sur le deuxième chemin de roulement (4) et sur la mise en position ;

   (c) - un tableau suivant (I) fait recommencer l'étape précédente (b); au cas où le défaut de saut du pignon (2) relevé est supérieur à une valeur S1 déterminée,

   (d) - des tableaux suivants (J, K, L, M) succédant à l'étape (b) correspondent au déplacement des chemins de roulement (3,4) par l'opérateur lorsque le défaut de saut du pignon (2) relevé est inférieur à ladite valeur S1 ;

   (e) - le tableau suivant (N) indique un contrôle des valeurs de défaut du pignon (2) dépassant les valeurs-limites admises et renvoie à une opération supplé-mentaire de réglage par retour à l'étape (b) ;

   f) - le tableau suivant (O) succédant à l'étape (d) indique un résultat accepté et correspond au démontage du pignon (2) ;

   (g) - les tableaux suivants (P, Q) succédant au tableau J de l'étape (d) indiquent que les corrections dépassent les valeurs admissibles ;

   (h) - le tableau suivant (R), succédant à l'une des étapes (f) ou (g) ramène le programme à l'étape initiale (a).

## Claims

1. Machine for setting up shafted gear wheels on a tooling jig with a view to grinding the inner end chamfers or centres, comprising in association with a machine bed (10), means (13) of holding the workpiece between tails stocks (19, 20), means of supporting between tail stocks a tool (17) fitted with master teeth (18), a drive spindle (21) rotating with the said workpiece associated with a drive motor, means of locating the said elements, workpiece and tool, and of checking (22, 23) and an associated cabinet (9) comprising the means of supplying power to the motor and the means of controlling the machine characterised in that it comprises in addition, on the one hand, designed to work respectively with each of two bearing raceways (3, 4) mounted at each end of the shafted gear wheel (2), two arms (24, 25) each carrying means of cooperative working consisting of a pusher (32, 33) on a rod (32a, 33a), two retractable pressure pads (28, 29, 30, 31) and at least one position-sensitive feeler sensor (24b, 25b, 24c) and, on the other hand, means of control by computer (34) whose running through of the setting up steps is ensured by means of operator-machine interaction comprising a visual display screen (35) displaying the successive steps of the setting up process in the form of successive images (A to R), indicating the results obtained and constituting in addition a means of inputting data and controlling the run through of the program on the basis of which the means of control of the machine are actioned by the said computer.

2. Machine for setting up shafted gear wheels on a tooling jig in accordance with Claim 1 in which the said screen is constituted by a touch-sensitive screen (35) with elements sensitive to thermal variation due to the infra red effect which initiates a signal through the pressure of the operator's finger.

3. Machine for setting up shafted gear wheels on a tooling jig in accordance with either of Claims 1 or 2 in which the running through of the setting up steps comprises the successive display on the screen (35) of the following images, associated with the corresponding interventions by the operator:

(a) - at least one image (A, B, C, D, E) for the inputting of at least one alphanumerical code identifying the gear wheel (2);

(b) - three following images (F, G, H) corresponding to the adjustments carried out by the operator on the machine respectively on the first bearing raceway (3), on the second bearing raceway (4) and on the positioning;

(c) - a following image (I) causes the recommencement of the preceding step (b) when the flexure defect in the gear wheel (2) is greater than a predetermined value S1;

(d) - the following images (J, K, L, M) succeeding step (b) correspond to the displacement by the operator of the bearing raceways (3, 4) when the flexure defect in the gear wheel (2) is lower than the said value S1;

(e) - the following image (N) indicates a check of the values of the defects in the gear wheel (2) exceed admissible values and reverts to an additional setting up operation by going back to step (b);

(f) - the following image (O) succeeding step (d) indicates an acceptable result and corresponds to the removal of the gear wheel (2);

(g) - the following images (P, Q) succeeding step (d) indicate that the corrections exceed admissible values;

(h) - the following image (R), succeeding either of steps (f) or (g) returns the program to the initial step (a).

**Patentansprüche**

1. Vorrichtung zum Einrichten von mit einer Welle versehenen Zahnrädern auf einem Arbeitsgerät zum Schleifen von inneren Abfasungen oder sogenannten Zentren, mit folgenden mit einem Maschinengestell ( 10) verbundenen Teilen:

Mitteln (13) zur Werkstücklagerung zwischen Spitzen (19, 20),

Mitteln (14) zur Lagerung einer eine Normverzahnung (18) aufweisenden Arbeitsvorrichtung (17) zwischen Spitzen (15, 16),

einer mit einem Antriebsmittel verbundenen Mitnehmerspindel (21) für den Drehantrieb des Werkstücks,

Mitteln (22, 23) zur Positionierung der genannten Elemente, nämlich des Werkstücks und der Arbeitsvorrichtung, und zur Kontrolle sowie

einen zugehörigen Schrank (9), der die Mittel zur Motorspeisung und die Mittel zur Steuerung der Vorrichtung enhält,

**dadurch gekennzeichnet**,

daß die Vorrichtung außerdem aufweist

- einerseits zwei Arme (24, 25), die jeweils für das Zusammenwirken mit jeder der beiden Wälzbahnen (3, 4) bestimmt sind, von denen auf jeder Stirnseite des mit einer Welle versehenen Zahnrades (2) jeweils eine vorgesehen ist, wobei diese beiden Arme (24, 25) jeweils Mittel zum Zusammenwirken tragen, die aus einem Stößel (32, 33) mit einer Stange (32a, 33a), zwei versenkbaren Stützkufen (28, 29, 30, 31 ) und wenigstens einem Positionsaufnehmer (24b, 25b, 24c) mit Taststift bestehen, und

- andererseits Mittel für die mittels Rechner (34) erfolgende Steuerung, wobei der Ablauf der Einrichtschritte durch Mittel zur Interaktion zwischen Bedienungsperson und Maschine ermöglicht wird, die einen Visualisierungsbildschirm (35) zur Wiedergabe der aufeinanderfolgenden Schritte des Einrichtvorgangs in Form von aufeinderfolgenden Bildern (A bis R) umfassen, die die gewonnenen Resultate anzeigen und die außerdem ein Mittel zur Daten- und Befehlseingabe für den Programmablauf bilden, von dem aus die Mittel zur Steuerung der Vorrichtung durch den Rechner (34) betätigt werden.

2. Vorrichtung zum Einrichten von mit einer Welle versehenen Zahnrädern auf einem Arbeitsgerät nach Anspruch 1, bei der der Bildschirm ein taktiler Bildschirm (35) mit auf thermische Änderungen durch Infraroteinwirkung ansprechenden Elementen ist, der auf den Fingerdruck einer Bedienungsperson hin ein Signal initialisiert.

3.   Vorrichtung zum Einrichten von mit einer Welle versehenen Zahnrädern auf einem Arbeitsgerät nach Anspruch 1 oder 2, bei der der Ablauf der Einrichtschritte den Ablauf folgender Bilder auf dem Bildschirm (35) umfaßt, die entsprechenden Eingriffen der Bedienungsperson zugeordnet sind:

(a) wenigstens ein Bild (A, B, C, D, E) zur Eingabe wenigstens eines alphanumerischen Kodes zur Identifizierung des Zahnrads (2),

(b) drei folgende Bilder (F. G. H), die den Einrichtmaßnahmen entsprechen, die die Bedienungsperson an der Vorrichtung bezüglich der ersten Wälzbahn (3), der zweiten Wälzbahn (4) bzw. der Positionierung vorgenommen hat,

(c) ein folgendes Bild (1), das den vorhergehenden Schritt (b) von neuem beginnen läßt, falls der ermittelte Sprung des Zahnrads (2) größer ist als ein vorbestimmter Wert S1,

(d) folgende Bilder J, K, L, M , die auf den der Verschiebung der Wälzbahnen (3, 4) durch die Bedienungsperson ensprechenden Schritt (b) folgen, wenn der ermittelte Fehler im Sprung kleiner ist als der genannte Wert S1,

(e) das folgende Bild (N), das eine Kontrolle der Fehlerwerte des Zahnrads (2) anzeigt, die die zulässigen Grenzwerte überschreiten und durch Rückkehr zu dem Schritt (b) zu einem zusätzlichen Einrichtvorgang führt,

(f) das auf den Schritt (d) folgende Bild (O), das ein akzeptiertes Resultat anzeigt und der Demontage des Zahnrads (2) entspricht,

(g) die folgenden Bilder (P, Q), die auf das Bild (J) des Schrittes (d) folgen und anzeigen, daß die Korrekturen die zulässigen Werte überschreiten,

(h) das folgende Bild (R), das auf einen der Schritte (f) oder (g) folgt und das Programm zu dem Anfangsschritt zurückführt.

FIG : 1

EP 0 344 037 B1

FIG : 2